# EUROPEAN PATENT SPECIFICATION

(11) **EP 0 460 625 B1**
(45) Date of publication and mention of the grant of the patent: **31.03.1999**
(21) Application number: 91109168.4
(22) Date of filing: 05.06.1991
(51) Int. Cl.: G06K 9/76

(54) **Optical information processing apparatus and method using computer generated hologram**
Verfahren und Gerät zur optischen Informationsverarbeitung mit Verwendung vom zu einem Computer erzeugten Hologramm
Méthode et dispositif de traitement optique d'information utilisant un hologramme généré par ordinateur

(30) Priority: 05.06.1990 JP 148242/90
(43) Date of publication of application: 11.12.1991
(73) Proprietor: MATSUSHITA ELECTRIC INDUSTRIAL CO., LTD., Kadoma-shi, Osaka-fu, 571 (JP)
(72) Inventor: Itoh, Masami, Takarazuka-shi, Hyogo (JP); Nishii, Kanji, Osaka-shi, Osaka (JP); Kawamura, Hiroyuki, Katano-shi, Osaka (JP); Fukui, Atsushi, Hirakata-shi, Osaka (JP)
(74) Representative: Eisenführ, Günther, Dipl.-Ing.

(56) References cited:
- JP-A- 2 132 412
- TELECOMMUNICATIONS AND RADIO ENGINEERING vol. 44, no. 5, May 1989, WASHINGTON US pages 50 - 52 , XP000148879 A. M. BEREZNYY ET AL. 'A Pattern Recognition System Using Polar-Logarithmic Image Conversion'
- OPTICAL ENGINEERING vol. 28, no. 5, May 1989, BELLINGHAM US pages 494 - 500 , XP000039296 YUNGLONG SHENG 'Fourier-Mellin spatial filters for invariant pattern recognition'
- PATENT ABSTRACTS OF JAPAN vol. 12, no. 125 (P-691) 19 April 1988 & JP-A-62 250 384 ( TOSHIBA CORP. ) 31 October 1987

## Description

The present invention relates to an optical information processing apparatus and method for an image sensing device of an industrial robot or the like which carries out filtering of an input image in a spatial frequency range, image processing such as feature extraction or the like, or discriminating an input pattern coincident with a specific reference pattern among a plurality of input images.

A conventional optical information processing apparatus of this type is disclosed, for example in JP-A-02 132 412.

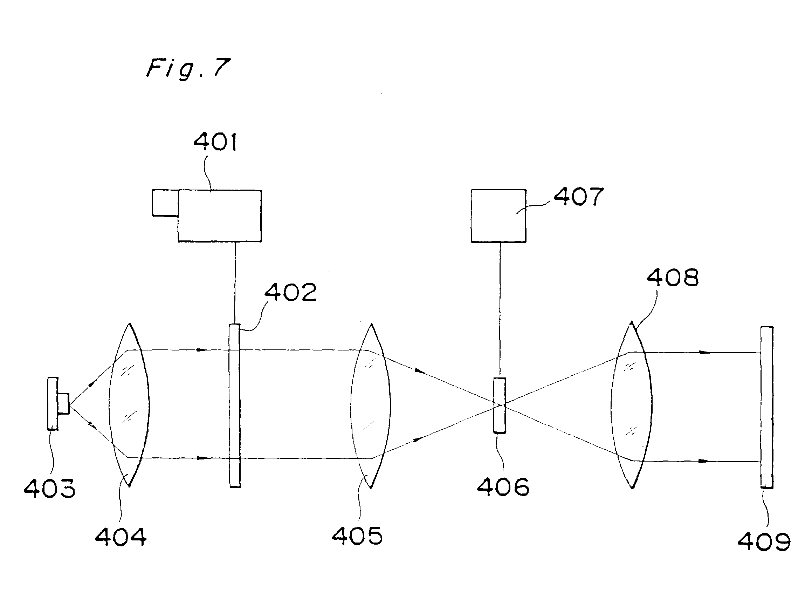

Fig. 7 shows a fundamental composition thereof.

In this apparatus, when an object is picked up by a TV camera 401, the image thereof is displayed on a first liquid crystal display 402 which is irradiated by a coherent light emitted from a laser diode 403 and collimated by a collimater lens 404. Since the first liquid crystal display 402 is arranged in the front focal plane of a first lens 405, a Fourier transformed image of the object is formed on a second liquid crystal display 406 arranged in the rear local plane of the first lens 405. At this time, a Fourier transformed image of a specific reference pattern is simultaneously displayed as an optical filter on the second liquid crystal display 406 in a form of Fourier transformation computer generated hologram by modulating spatially the transmissive rate of each pixel thereof using data related to the specific reference pattern which is memorized in a ROM 407. Accordingly, the Fourier transformed images of the object and the specific reference image are superposed on the second liquid crystal display 406.

Since the second liquid crystal display is arranged in the front plane of a second lens 408, these Fourier transformed images are optically Fourier transformed by the second lens 408. If both Fourier transformed images on the second display 406 coincide with each other, a bright point is generated on rear focal plane of the second lens 408 and is detected by a photodetector 409. Thus, the object is discriminated by detecting the bright point.

However, in the conventional apparatus mentioned above, it is impossible to perform an exact pattern matching in a case in that an object is varied in the scale thereof or rotated since correlation factors between the images of the object and the reference pattern are varied thereby.

In order to solve this problem, D. Casasent et. al., proposed to perform a pattern matching between the image of the object and the reference pattern after executing a coordinate transformation of the image of the object which is invariant to variation in the scale thereof or rotation thereof [See D. Casasent et. al., Appl. Opt. 26,938 (1987)].

However, according to the composition proposed by D. Casasent et. al., a plurality of input patterns have to be interchanged in turn and, also, it becomes necessary to interchange a plurality of phase filters for coordinate transformation in turn upon performing plural coordinate transformations. However, since it becomes necessary to position each phase filter at an extremely high accuracy, real-time processing for the coordinate transformation of the input pattern is impossible resulting in a lack of flexibility.

Furthermore, the apparatus of this type has a disadvantage in that it is difficult to recognize an object exactly when the object is moved parallel to the origin of a logarithmic polar coordinate since scale and rotation invariance is obtained only in a case that the center of the object coincides with the origin of the above coordinate.

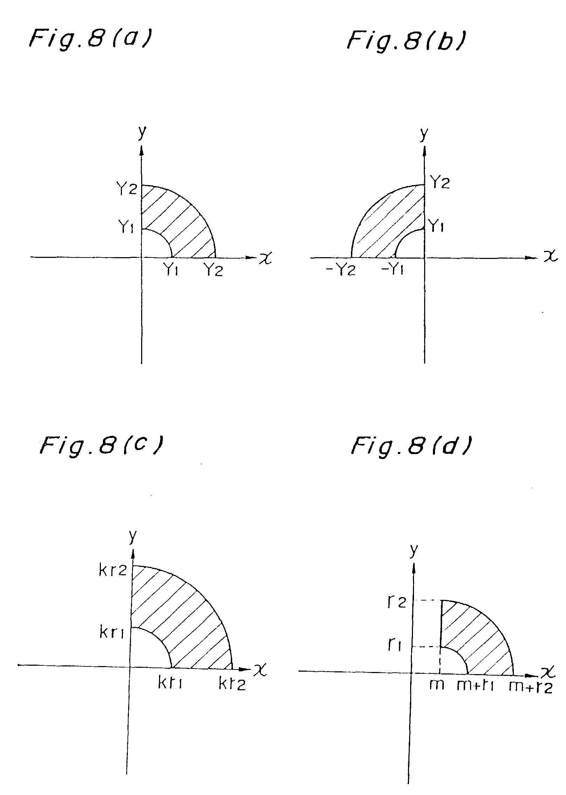

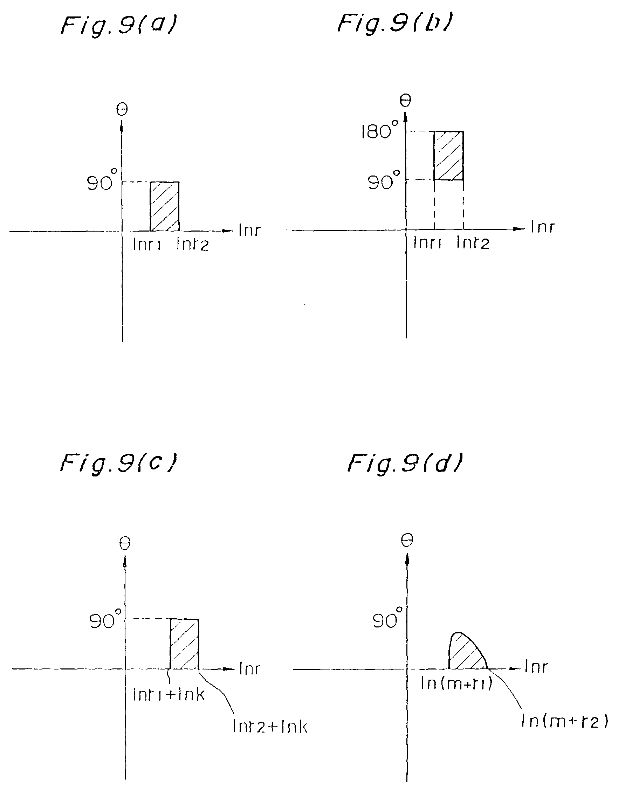

This will be explained below using Figs. 8 and 9.

In Fig. 8, (b) shows a pattern obtained by rotating pattern of (a) by 90° about the origin of coordinate, (c) shows a pattern obtained by magnifying the pattern of (a) by k-times and (d) shows a pattern obtained by shifting the pattern of (a) in x-direction by a distance m. In Fig. 9, (a), (b), (c) and (d) show patterns obtained by logarithmic polar coordinate transforming patterns of (a), (b), (c) and (d) of Fig. 8. As is apparent in Fig. 9, the patterns of (b) and (c) are obtained by parallel-shifting the pattern of (a). Since the shift invariance is maintained in the pattern matching with use of a Fourier transforming optical system, patterns of (a), (b) and (c) are recognized same and, accordingly, the scale and rotation invariance is maintained at the origin. However, the pattern (d) being the pattern obtained from the pattern (d) of Fig. 8 is quite different from the pattern (a) and, accordingly, the former is not recognized same as the latter.

One of object of the present invention is to provide an optical information processing apparatus and a method which are able to process optical information real-time and, accordingly, to afford a great flexibility.

Another object of the present invention is to provide an optical information processing apparatus and a method capable of recognizing a target object exactly even if it is shifted parallel to the origin of a coordinate of the system.

A further object of the present invention is to provide an optical information processing apparatus and a method capable of measuring an angle of rotation of, and a distance to, a target object.

To accomplish these objects, an optical information processing apparatus is structured as defined in claims 1, 3, 5, 7 and 9, whereas an optical recognition method for recognizing an object by pattern-matching an image of an object with reference images comprises the method steps of claim 11 or 12.

Preferable embodiments are defined in the dependent claims.

Thus, according to the present invention, the correlation factor between the input image and the reference image is kept unchanged even if the object is rotated or parallel-shifted or the input image is varied in scale.

The coordinate-transformation for the input image is made as a real-time processing by displaying an optical phase filter therefor such as a computer generated hologram on the second spatial light modulator.

According to one aspect of the present invention, the Fourier-transformation and coordinate-transformation regarding reference patterns can be made beforehand using a computer. Data thus obtained are memorized in a memory and it becomes possible to obtain an optical image necessary for comparing with the coordinate-transformed image of the Fourier-transformed image of an input image on the spatial light modulator directly.

Further, according to another aspect of the present invention, the rotation angle of an object and/or distance thereto can be measured by detecting the maximum correlation value between two images while rotating and/or zooming the image input means relative to the object.

These and other objects and features of the present invention will become clear from the following description taken in conjunction with the preferred embodiments thereof with reference to the accompanying drawings throughout which like parts are designated by like reference numerals, and in which:
Fig. 1 is a block diagram showing an optical information processing apparatus according to a first referred embodiment of the present invention,
Fig. 2(A), 2(B), 2(C) and 2(D) are plan views for showing optical images at positions A, B, C and D indicated in Fig. 1,
Fig. 3, 4, 5, and 6 are block diagrams showing optical information processing apparatus according to second to fifth preferred embodiments of the present invention,
Fig. 7 is a block diagram showing a conventional optical information processing apparatus,
Fig. 8 shows variations of input images having one origin, and
Fig. 9 shows coordinate-transformed images of respective input images shown in Fig. 8.

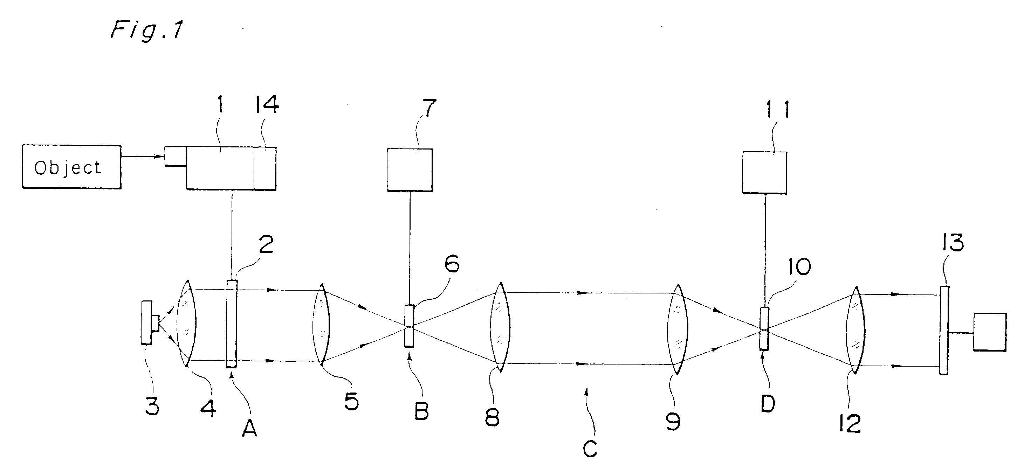

Fig. 1 is a block diagram for showing a composition of an optical information processing apparatus according to a first preferred embodiment of the present invention.

In Fig. 1, a reference numeral 1 indicates a TV camera capable of varying zooming ratio, 2 indicates a first liquid crystal display which displays the image of an object picked up by said camera, 3 indicates a laser diode, 4 indicates a collimeter lens which collimates the laser light emitted from said laser diode 3 and 5 indicates a first lens. The first liquid crystal display 2 is arranged on the front focal plane of the first lens 5. A second liquid crystal display 6 is arranged on the rear focal plane of the first lens 5. A reference numeral 7 indicates a first memory which memorizes data of coordinate transformation computer generated hologram calculated for plural coordinate transformations with sampling points of respective pixels on the second liquid crystal display 6. In other words, voltage data to applied corresponding to transmittance of individual pixels of the second display have been written into said first memory 7. A reference numeral 8 indicates a second lens and on the front focal plane thereof, said second liquid crystal display 6 is arranged. Further, a reference numeral 9 is a third lens arranged so as to have the front focal plane which coincides with the rear focal plane of the second lens 8, 10 indicates a third liquid crystal display arranged on the rear focal plane of the third lens 9 and 11 indicates a second memory which memorizes data of Fourier transformation computer generated hologram calculated for plural reference patterns with sampling points of respective pixels on the third liquid crystal display 10. In other words, voltage data to be applied corresponding to transmittances of individual pixels of the third display 10 have been written into said second memory 11.

Further, reference numeral 12, 13 and 14 indicate a fourth lens having a front focal plane on the third liquid crystal display 10, a photoelectric transforming device arranged on the rear focal plane of the fourth lens and a device for rotating the TV camera, respectively.

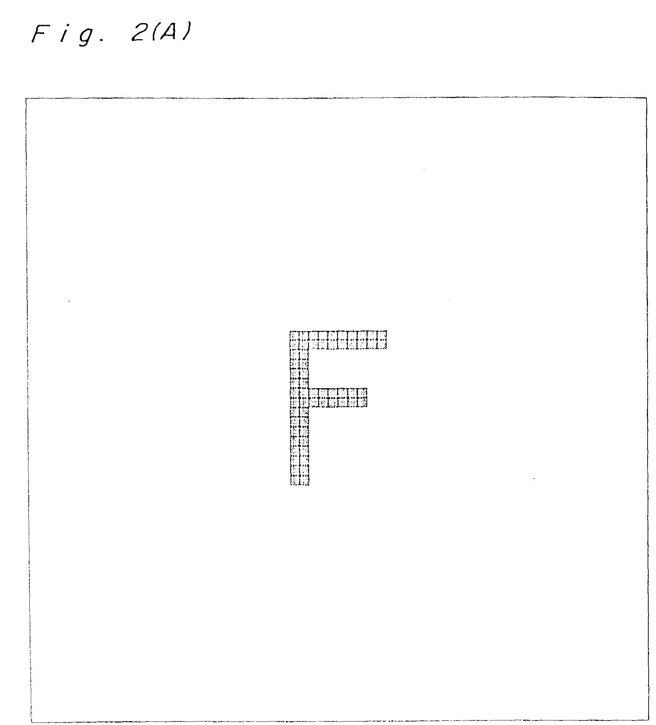

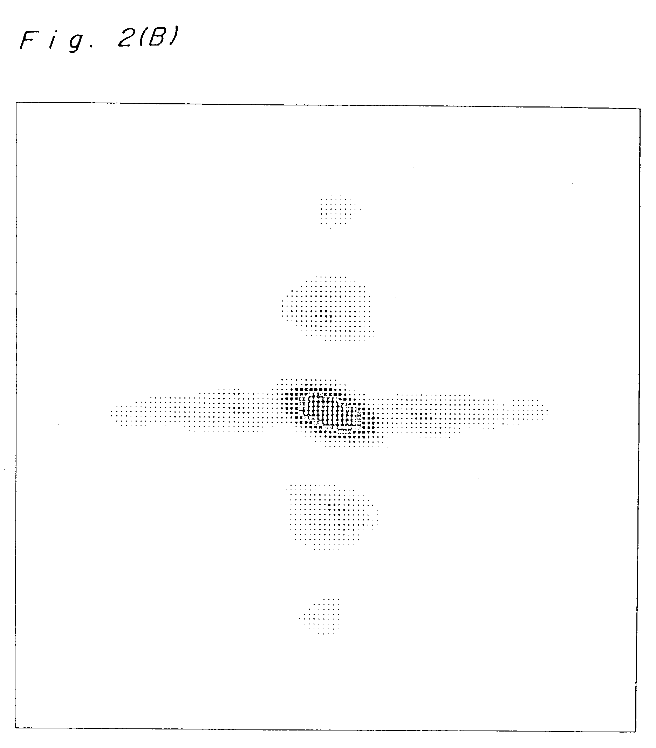

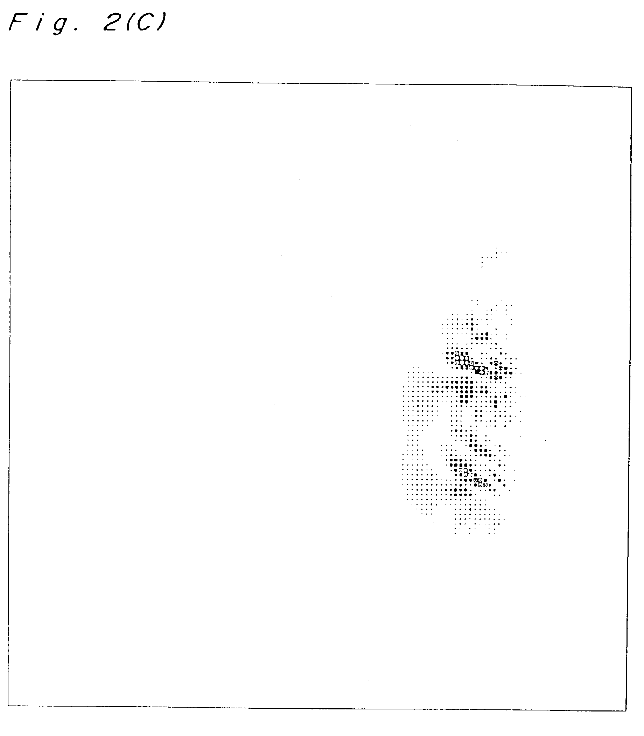

When the image of an object is picked up by the TV camera 1, the same is displayed on the first liquid crystal display 2. For instance, when the object is character "F" as shown in Fig. 2(A), the character "F" itself is displayed on the first liquid crystal display 2.

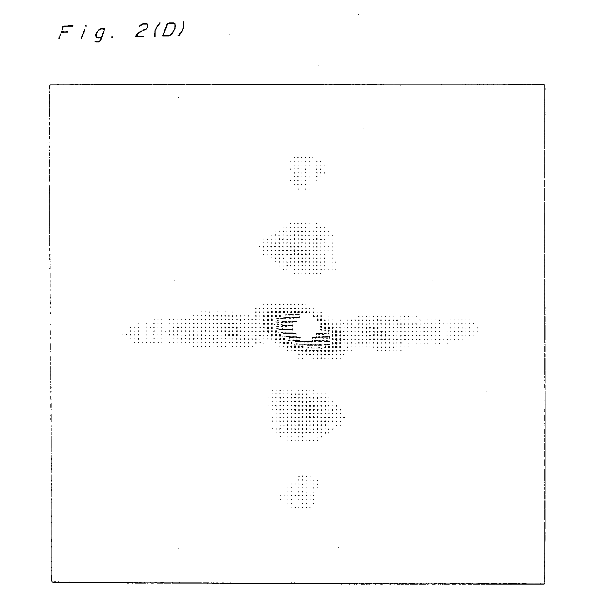

This first liquid crystal display 2 is irradiated by a coherent light emitted from the laser diode 3 and collimated by the first collimater lens 5. Since it is arranged on the front focal plane of the first lens 5, a Fourier transformed image I_{F} of the object image is formed on the rear focal plane of the first lens 5, namely on the second liquid crystal display 6 by the first lens 5. Fig. 2(B) shows the Fourier transformed image of character "F", for example.

At the same time, phase information A of a phase filter for performing an optical coordinate transformation is displayed in a form of a coordinate transforming computer generated hologram by modulating transmittances of respective pixels of the second liquid crystal display 6 spatially using the data written into the first memory 7 as input signals. The method for forming phase information of the phase filter is disclosed, for example, in the article by D. Casasent et. al., mentioned above.

Accordingly, the Fourier transformed image I_{F} of the object image and the phase informations A for performing a specific coordinate transformation are superposed on the second liquid crystal display 6 and a composite image I_{F} x A is formed.

Further, since the second liquid crystal display 6 is arranged on the front focal plane of the second lens 8, said composite image I_{F} x A is optically Fourier-transformed by the second lens 8 and, thereby, a coordinate transformed image CT(I_{F}) of the Fourier transformed image I_{F} which is equivalent to a Fourier transformed image FT(I_{F} × A) of said composite image I_{F} x A is formed on the rear focal plane of the second lens 8 (See Fig. 2(C)). Hereinafter, symbols CT and FT indicate "coordinate transformations" and "Fourier transformation", respectively.

Since the rear focal plane of the second lens 8 is arranged on the front focal plane of the third lens 9, an optically Fourier transformed image FT{CT(I_{F})} of the CT(I_{F}){= FT[FT(I_{F} x A)]} is formed on the rear focal plane of the third lens 9, namely on the third liquid crystal display 10.

At the same time, a Fourier transformed image FT{CT(B)} of a coordinate transformed image CT(B) of a Fourier transformed image B of a specific reference pattern is displayed on the third liquid crystal display 10 as an optical filter in a form of Fourier transforming computer generated hologram by modulating transmittances of respective pixels of the third liquid crystal display 10 using the data written in the second memory 11 as input signals.

Thus, both Fourier transformed images FT{CT(I_{F})} and FT{CT(B)} are superposed on the third liquid crystal display 10 to form a composite image FT{CT(I_{F})} x FT{CT(B)} (See Fig. 2(D)).

Also, since the third liquid crystal display 10 is arranged on the front focal plane of the fourth lens 12, the composite image FT{CT(I_{F})} x FT{CT(B)} is optically Fourier transformed by the fourth lens 12. If CT(I_{F}) coincides with CT(B), namely both are the same image, a luminescent point is generated on the rear focal plane of the second lens 8 and is detected by the photodetector 13. According to the first preferred embodiment, an object image is optically Fourier transformed at first and the Fourier transformed image is pattern-matched with a reference pattern after performing a logarithmic polar coordinate transformation to the former. Therefore, correlation values with the reference pattern are kept unchange even if the object is rotated or parallel-displaced or the scale thereof is changed.

Further, it becomes possible to transform an input pattern real time easily by displaying the image picked up by the TV camera 1 on the first liquid crystal display 2. Furthermore, since it is possible to form phase filters in turn on the second liquid crystal display 6 real time by modulating transmittances of respective pixels spatially according to phase information for performing plural coordinate transformations which have been written in the first memory 7 beforehand, the real-time capability and flexibility of the optical information processing apparatus are highly enhanced.

When the pattern matching with the reference pattern having been recognized is performed after executing a coordinate transformation capable of keeping the correlation value with the reference pattern unchanged, for example, a logarithmic transformation while rotating the TV camera 1 by the rotation device 14, the correlation value varies as the TV camera rotates. When the correlation value becomes maximum, a rotation angle between the object and the reference pattern becomes equal to zero. Accordingly, it becomes possible to detect the rotation angle of the object by measuring a rotation angle of the TV camera 1 from the initial position to a position at which the correlation value becomes maximum using, for example an encoder.

Further, when the pattern matching with the recognized reference pattern is performed while varying the zooming ratio of the TV camera 1 without any coordinate transformation by lighting the whole of the second liquid crystal display 6, the correlation value is varied according to the zooming ratio. When the correlation value becomes maximum, the magnitude of an object image coincides with that of the recognized reference pattern. Accordingly, the magnitude of the input object image can be obtained from the initial zooming ratio and that corresponding to the maximum correlation value.

Since the magnitude of an object image picked up by the TV camera varies depending on a distance from the object to the TV camera, the distance can be calculated from the zooming ratio which gives the maximum correlation value if a relation between the zooming ratio and the distance at which the magnitude of the object image becomes equal to that of the reference pattern.

Thus, according to the present invention, there is provided an optical information processing apparatus capable of not only pattern-matching but also measuring a rotation angle of an object and a distance to the object.

Although the liquid crystal displays of electrically writable type are used for the first, second and third spatial light modulators in the present preferred embodiment, spatial light modulator such as light-writable liquid crystal devices, optical crystal devices such as BSO_{S} or the like may be used.

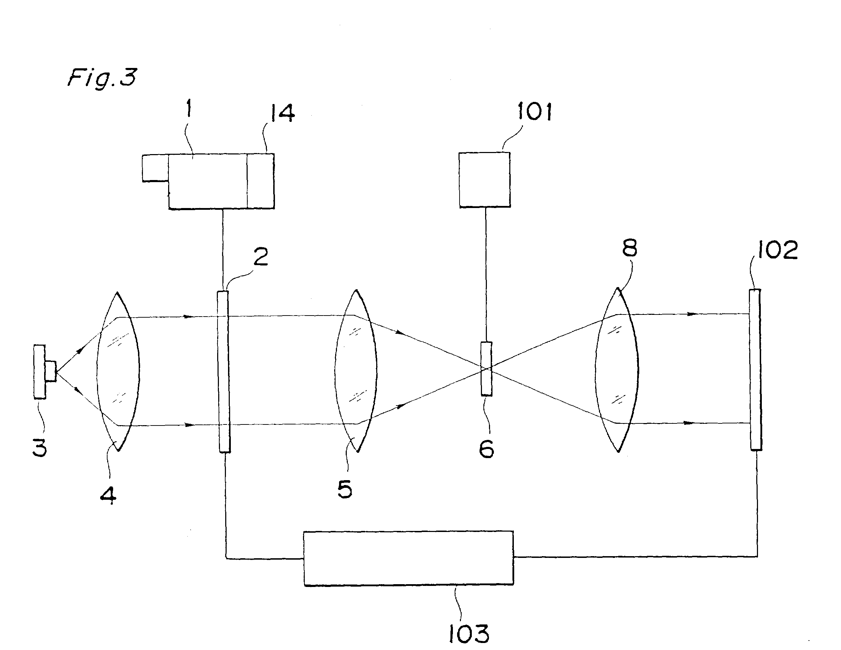

Fig. 3 is a block diagram of the optical information processing apparatus according to a second preferred embodiment of the present invention. Like reference numerals in Fig. 3 indicates like elements in Fig. 1.

In the second preferred embodiment, a memory 101 is provided for memorizing data of coordinate transformation computer generated hologram calculated beforehand for plural coordinate transformations using sampling points of respective pixels on the second liquid crystal display 6 and data of Fourier transformation computer generated hologram calculated beforehand for plural reference patterns using sampling points of respective pixels on the second liquid crystal display 6, namely voltage data to be applied corresponding to transmittances of respective pixels of the second liquid crystal display.

Reference numerals 102 and 103 are photo-electric transforming device arranged on the rear focal plane of the second lens 8 and signal means for transforming an output signal from the photo-electric transforming device to a signal adapted to the first liquid crystal display 2, for instance, a non-interlace signal and inputting the same to the first liquid crystal display 2, respectively.

In operation, when an object image is picked up by the TV camera 1, the image is displayed on the first liquid crystal display 2. The same is irradiated by a coherent light emitted from the diode laser 3 and collimated by the first collimate lens 5. Since the first liquid crystal display 2 is arranged on the front focal plane of the first lens 5, an image I_{F} Fourier transformed by the first lens 5 is formed on the second liquid crystal display 6 arranged on the rear focal plane of the first lens 5.

At the same time, phase information A of each phase filter for optical coordinate transformation is displayed on the second liquid crystal display 6 in a form of coordinate transforming computer generated hologram by modulating transmittances of respective pixels of the second liquid crystal display 6 using data written in the memory 101 as input signal.

Accordingly, the Fourier transformed image I_{F} of the object image and the phase information A for performing a specific coordinate transformation is superposed on the second liquid crystal display 6 and, thereby, a composite image I_{F} × A is formed.

Also, since the second liquid crystal display 6 is arranged on the front focal planed of the second lens 8, the composite image I_{F} × A is optically Fourier transformed by the second lens 8 and the coordinate transformed image CT(I_{F}){=FT-(I_{F}×A)} is detected by the photoelectric transforming device 102 arranged on the rear focal plane of the second lens. This image is displayed on the first liquid crystal display 2 by the signal transforming means 103.

At this time, a Fourier-transformed image [B=FT(b) orFT {CT(B)}] of a specific reference pattern b or a coordinate-transformed image CT(B) of a Fourier-transformed image B=FT(b) as an optical filter is displayed on the second liquid crystal display 6 in a form of Fourier transformation computer generated hologram by modulating transmittances of respective pixels of the second liquid crystal display 6 using data written in the memory 101 as input signals.

Accordingly, the Fourier-transformed image FT{CT(I_{F})} of the coordinate-transformed image CT(I_{F}) and the Fourier-transformed image FT{CT(B)} calculated beforehand from the coordinate-transformed reference pattern CT(B) are superposed on the second liquid crystal display 6 and, thereby, an optical product FT{CT(I_{F})} × FT{CT(B)} is obtained.

This optical product of two Fourier-transformed image is optically transformed by the second lens 8 since the second liquid crystal display 6 is arranged on the front focal plane of the second lens 8.

If both coordinate-transformed images CT(I_{F}) and CT(B) coincide with each other, a luminescent point is generated on the rear focal plane of the second lens 8 and is detected by the photoelectric transforming device 102.

Thus, substantially same effects as those of the first preferred embodiment are obtained by this preferred embodiment.

Further, according to this preferred embodiment, the third lens 9, the third liquid crystal display 10, the second memory 11 and the fourth lens 12 of the first preferred embodiment can be omitted since the coordinate-transformed images are displayed on the first liquid crystal display 2 using the photoelectric transforming device 102 and the signal transforming means 103. Thus, the length of optical path becomes one half of that of the first preferred embodiment and, therefore, a compact and light optical information processing apparatus can be obtained.

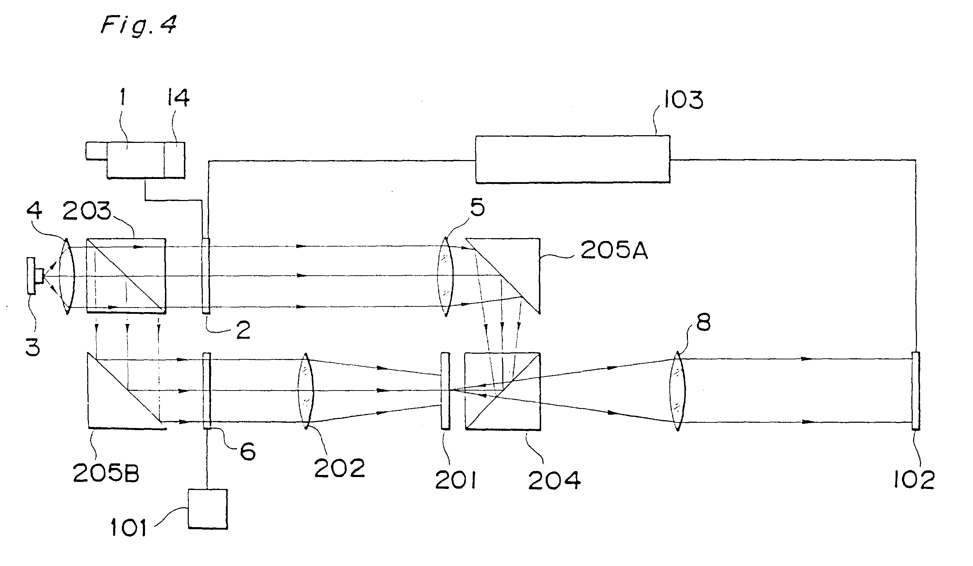

Fig. 4 is a block diagram of a third preferred embodiment of the present invention. Like reference numerals in Fig. 4 denote like elements in Fig. 3.

In Fig. 4, reference numerals 201, 202, 203, 204 and 205 indicate a third spatial light modulator using a light refractive material, a third being a contraction projection lens, a first beam splitter, a second beam splitter and an optical path switching mirror, respectively. The first liquid crystal display 2 is arranged on the front focal plane of the first lens 5 and the spatial light modulator 201 is arranged on the rear focal plane of the first lens 5. Further, the second lens 8 is arranged so as for the front focal plane thereof to coincide with the rear focal plane of the first lens 5 and the photo-electric transforming device 102 is arranged on the rear focal plane of the second lens 8.

In operation, when an object image is picked up by the TV camera 1, the object image is displayed on the first liquid crystal display 2. This display 2 is irradiated by a coherent light emitted from the laser diode 3 and collimated by the first collimater lens 4. Since it is arranged on the rear focal plane of the first lens 5, namely on the spatial light-modulator 201 by the first lens 5.

At the same time, the phase information A of the phase filter for performing a coordinate transformation optically is displayed on the second liquid crystal display 6 in a form of coordinate transforming computer generated hologram by modulating transmittances of respective pixels of the second liquid crystal display 6 using data written in the memory 101 as input signals. This coordinate transforming computer generated hologram is irradiated by a collimated light which is splitted by the first beam splitter 203 arranged at the rear side of the collimate lens 4 and is written into the spatial light-modulator device 201 in a form of a spatial distribution of the transmission by the third lens 202.

Accordingly, the Fourier-transformed image I_{F} of the object image and the phase information A are reflected in a manner superposed on the spatial light-modulator 201. Since the spatial light-modulator 201 is arranged on the front focal plane of the second lens 8, the optical product I_{F} x A of the Fourier-transformed image I_{F} and the phase information A is optically Fourier-transformed by the second lens 8 and the coordinate-transformed image
CT(I_{F}){=FT(I_{F}xA)} of the Fourier-transformed image I_{F} is detected by the photo-electric transforming device 102 arranged on the rear focal plane of the second lens 8. It is displayed on the first liquid crystal display 2 by the signal transforming means 103.

At the same time, A Fourier-transformed image[B=FT(b) or FT{CT(B)}] of a specific reference pattern b or a coordinate-transformed image CT(B) of a Fourier-transformed image B=FT(b) as an optical filter is displayed on the second liquid crystal display 6 in a form of a Fourier-transformation computer generated hologram by modulating transmittances of respective pixels of the second liquid crystal display 6 spatially using data written into the memory 101 as input signals.

Accordingly, the Fourier-transformed images FT{CT(I_{F})} and FT{CT(B)} are superposed on the spatial light modulator 201 and the superposed image FT{CT(I_{F})} × FT{CT(B)} is reflected thereby. Also, since the spatial light modulator 201 is arranged on the front focal plane of the second lens 8, the superposed image FT{CT(I_{F})} × FT{CT(B)} is optically Fourier-transformed by the second lens 8.

If the coordinate-transformed images CT(I_{F}) and CT(B) coincide with each other, a luminescent point is generated on the rear focal plane of the second lens 8 and detected by the photo-electric transforming device 102.

According to this preferred embodiment, effects substantially same as those of the second preferred embodiment can be obtained.

Further, it becomes possible to raise the spatial density of pixels of the liquid crystal display substantially in the present embodiment since the image on the second liquid crystal display 6 written into the spatial light modulator 201 after contracting the same by the third lens 202. This means that it is possible to realize a matched filter, including higher frequency components then those in the first and second preferred embodiments on the spatial light modulator 201. In other words, the present preferred embodiment can provide an optical information processing device capable of discriminating an object including capable of discriminating an object including a much more fine structure when compared with the foregoing preferred embodiments.

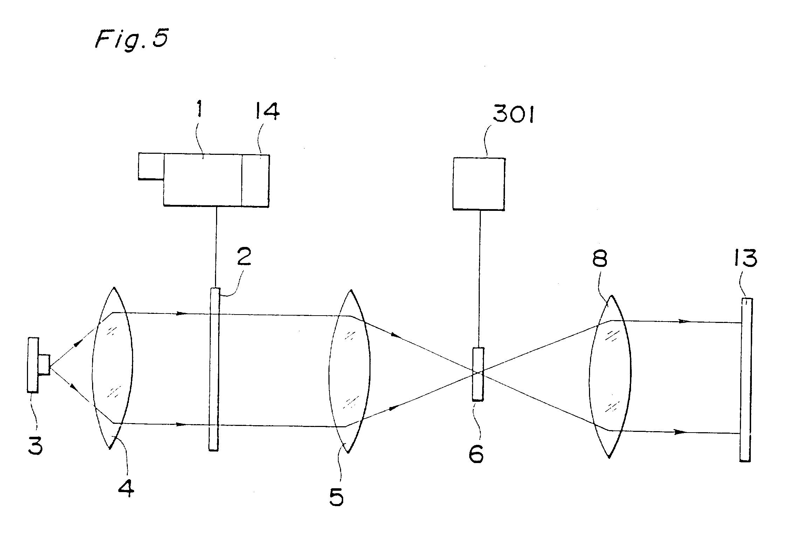

Fig. 5 is a block diagram for showing a fourth preferred embodiment of the present invention wherein like reference numerals denote like elements illustrated in Fig. 3.

In this preferred embodiment, there is provided a memory 301 which memorizes data of computer generated hologram calculated on the basis of data obtained by producing phase information for performing a coordinate transformation by complex amplitude information obtained by Fourier-transforming a coordinate-transformed image of a Fourier-transformed image of a reference pattern, namely voltage data to be applied corresponding to transmittances of respective pixels of the second liquid crystal display 2.

In operation of the fourth preferred embodiment when an object image is picked up by the TV camera 1, it is displayed on the first liquid crystal display 2. This liquid crystal display 2 is irradiated with a coherent light emitted from the laser diode 3 and collimated by the first collimate lens 4. Since the first liquid crystal display 2 is arranged on the front focal plane of the first lens 5, a Fourier-transformed image I_{F} is formed on the second liquid crystal display 6.

Next, a method for forming the computer generated hologram to be displayed on the second liquid crystal display 6 will be explained.

At first, phase information A for performing the coordinate transformation is formed. The forming method of the phase information its self is disclosed in the article of D. Cavasent et. al. mentioned above.

Next, complex amplitude information FT{CT(B)} is formed by Fourier-transforming a coordinate-transformed image of a Fourier-transformed image B of a reference pattern. Then, new complex amplitude information C[=AxFT{CT(B)}] is formed by producing the phase information A by the complex amplitude information FT{CT(B)}. The data based on this new complex amplitude information C are written into the memory 301 and the computer generated hologram is realized on the second liquid crystal display 6 by modulating transmittances of respective pixels of the second liquid crystal display 6 spatially using the data memorized in the memory 301 as input signals.

Thus, the Fourier-transformed I_{F} and the new complex amplitude information C[=AxFT{CT(B)}] are superposed on the second liquid crystal display 6.

This optical product I_{F} × C [=I_{F}×A×FT{CT(B)}] is equivalent to the superposed image on the third liquid crystal display 10 in the first preferred embodiment. This is understood as follows. In the first preferred embodiment, the Fourier-transformed image I_{F} of an object image and the phase information A are superposed on the second liquid crystal display 6. This optical product I_{F} × A is Fourier-transformed twice by the second and third lens 8 and 9 and, therefore, it is kept as it is. Then, the optical product I_{F} × A and the complex amplitude information FT{CT(B)} are superposed on the third liquid crystal display, namely I_{F} × A × FT(CT(B)) is obtained thereon. This state is same as that realized on the second liquid crystal display in the fourth preferred embodiment. This is the reason why the optical product on the second liquid crystal display 6 of the preferred embodiment is equivalent to that realized on the third liquid crystal display of the first preferred embodiment.

Further, since the second liquid crystal display 6 is arranged on the front focal plane of the second lens 8, the optical product I_{F} × A × FT{CT(B)} is further Fourier-transformed by the second lens 8.

Thus, if the object is identical to the reference pattern, a luminescent point is generated on the rear focal plane of the second lens 8 and is detected by the photodetector 13.

According to the fourth preferred embodiment, all of effects obtained by first and second preferred embodiments can be obtained.

Further, since no signal transforming means is needed in the fourth preferred embodiment and it is not necessary to redisplay the coordinate-transformed image of the Fourier-transformed image of an object image on the first liquid crystal display 6, there is provided an optical information processing apparatus having a fast processing time.

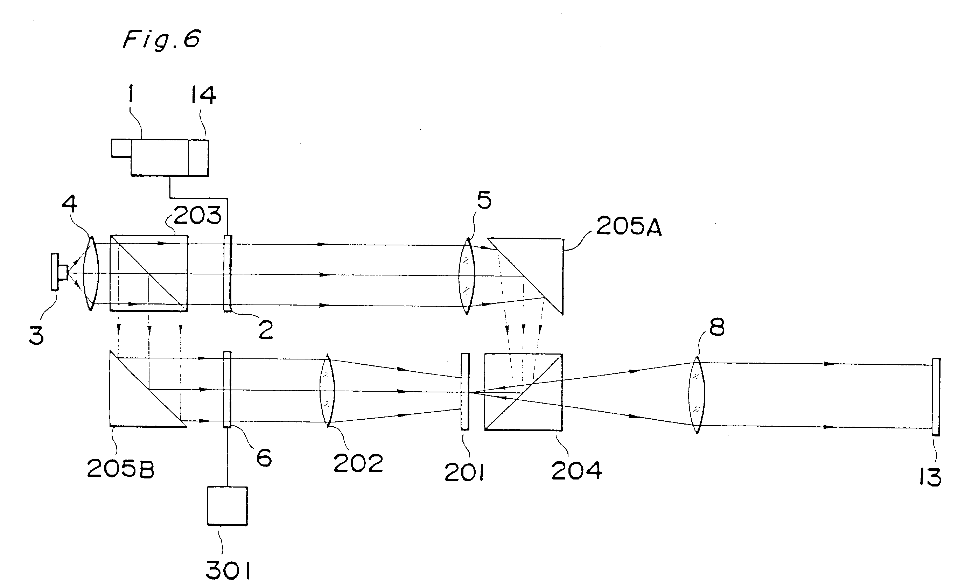

Fig. 6 is a block diagram showing a fifth preferred embodiment of the present invention wherein like reference numerals denote like elements illustrated in Fig. 1, Fig. 4 or Fig. 5.

This fifth preferred embodiment provides a memory 301 memorizing data for controlling the second liquid crystal display 6 instead of the memory 101 and the signal transforming means 103 of the third preferred embodiment illustrated in Fig. 4.

The memory 301 memorizes the data substantially same as those used in the fourth preferred embodiment of the present invention.

In operation thereof, an object image picked up by the TV camera 1 is displayed on the first liquid crystal display 2 which is irradiated by a coherent light emitted from the laser diode 3 and collimated by the collimater lens 4. The object image displayed on the first liquid crystal display 2 is optically Fourier-transformed by the first lens 5 and the Fourier-treansformed image I_{F} is formed on the spatial light-modulating device 201 arranged on the rear focal plane of the first lens 5. At the same time, a computer generated hologram is formed on the light-modulating device 201 in a manner similar to that stated in the fourth preferred embodiment. Namely, it is formed by modulating transmittances of respective pixels of the second liquid crystal display 6 spatially using the data memorized in the memory 301 as input signals. The computer generated hologram thus formed on the second liquid crystal display 6 which is irradiated by a coherent light splitted by the first beam splitter 203 is projected on the spatial light-modulating device 201 contractedly by the third lens 202 in a form of spatial distribution of the transmission.

Accordingly, the Fourier-transformed image I_{F} and data C[=A×FT{CT(B)}] which is an optical product of the phase information A and complex amplitude information FT{CT(B)} are superposed on the spatial light-modulating device 201 and reflected thereby.

This optical product I_{F} × C[=I_{F}×A×FT{CT(B)}] is the same as that obtained in the fourth preferred embodiment and is optically Fourier-transformed by the second lens 8. If the object image coincides with the reference pattern, a luminescent point is generated on the light detecting device 13.

According to this preferred embodiment of the present invention, all the effects obtained by the foregoing preferred embodiment can be also obtained.

## Claims

1. An optical information processing apparatus comprising an input means (1) for inputting an image of an object:
a first spatial light modulator (2) for displaying said input image;
a light source (3) for coherently irradiating said first light modulator (2);
a first lens means (5) arranged so as for its front focal plane to coincide with the plane on which said first spatial light modulator (2) is arranged;
a second spatial light modulator (6) including memory means (7) and arranged on the rear focal plane of said first lens (5) for displaying a coordinate-transforming computer generated hologram for coordinate transforming a Fourier-transformed image of said input image displayed on said first spatial light modulator (2);
a second lens means (8) arranged so as for its front focal plane to coincide with the rear focal plane of said first lens means (5);
a third lens means (9) arranged so as for its front focal plane to coincide with the rear focal plane of said second lens means (8);
a third spatial light modulator (10) arranged on the rear focal plane of said third lens means (9) for displaying a computer generated hologram regarding a reference pattern to be compared with said input image;
a fourth lens means (12) arranged so as for its front focal plane to coincide with the plane on which said third spatial light modulator (10) is arranged, and
a photo detecting means (13) arranged on the rear focal plane of said fourth lens means (12).

2. The optical information processing apparatus as claimed in claim 1 wherein each of said first to third spatial light modulators (2,6,10) is comprised of a liquid crystal display.

3. An optical information processing apparatus comprising:
an input means (1) for inputting an image of an object;
a first spatial light modulator (2) for selectively displaying said input image and the output signal from a signal transforming means (103);
a light source (3) for coherently irradiating said first light modulator (2);
a first lens means (5) arranged so as for its front focal plane to coincide with the plane on which said fisrt spatial light modulator (2) is arranged;
a second spatial light modulator (6) including a memory (101) and arranged on the rear focal plane of said first lens means (5) for displaying a coordinate-transforming computer generated hologram for coodinate-transforming a Fourier-transformed image of said input image and a computer generated hologram regarding a reference pattern to be compared with said input image, selectively;
a second lens means (8) arranged so as for its front focal plane to coincide with the rear focal plane of said first lens means (5);
a photoelectric transforming device (102) arranged on the rear focal plane of said second lens means (8); and
wherein the signal transforming means (103) is arranged ot transform output signals of said photoelectric transforming device (102) to input the transformed signals as input signals to said first spatial light modulator (2).

4. The optical information processing apparatus as claimed in claim 3 wherein each of said first and second spatial light modulators (2,6) is comprised of a liquid crystal display.

5. An optical information processing apparatus comprising:
an input means (1) for inputting an image of an object;
a first spatial light modulator (2) for selectively displaying said input image and the output signal from a signal transforming means (103);
a first lens means (5) arranged so as for its front focal plane to coincide with the plane on which said first spatial light modulator (2) is arranged;
a second spatial light modulator (201) of light writing type arranged on the rear focal plane of said first lens means (5) on one side of which the image Fourier-transformed by said first lens (5) is written;
a third spatial light modulator (6) including a memory (101) for selectively displaying a coordinate transforming computer generated hologram and a computer generated hologram regarding a reference pattern to be compared with said input image;
a second lens means (202) for projecting a condensed image of an image displayed on said third spatial light modulator (6) onto the other side of said second spatial light modulator (201), thereby superposing the Fourier-transformed image displayed on said first spatial light modulator (2) and the image displayed on said third spatial light modulator (6);
a third lens means (8) arranged so as for its front focal plane to coincide with the plane on which said second spatial light modulator (201) is arranged;
a light source (3) for coherently irradiating said first light modulator (2) and said third light modulator (6);
a photoelectrical transforming device (102) arranged on the rear focal plane of said third lens means (8); and
wherein the signal transforming means (103) is arranged to transform output signals of said photoelectric transforming device (102) to input transformed signals as display signals to said first spatial light modulator (2).

6. The optical information processing apparatus as claimed in claim 5 wherein each of said first and third spatial light modulators is comprised of a liquid crystal display.

7. An optical information processing apparatus comprising:
an input means (1) for inputting an image of an object;
a first spatial light modulator (2) for displaying said input image;
a light source (3) for coherently irradiating said first light modulator (2);
a first lens means (5) arranged so as for its front focal plane to coincide with the plane on which said first spatial light modulator (2) is arranged;
a second spatial light modulator (6) including a memory (301) and arranged on the rear focal plane of said first lens (5) for displaying a product of information as a matched filter and phase information for coordinate transformation in a form of a computer generated hologram;
a second lens means (8) arranged so as for its focal plane to coincide with the rear focal plane of said first lens means (5); and
a photo detecting device (13) arranged on the rear focal plane of said second lens means.

8. The optical information processing apparatus as claimed in claim 7 wherein each of said first and second spatial light modulators is comprised of a liquid crystal display.

9. An optical information processing apparatus comprising:
an input means (1) for inputting an image of an object;
a first spatial light modulator (2) for displaying said input image;
a light source (3) for coherently irradiating said first light modulator (2);
a first lens means (5) arranged so as for its front focal plane to coincide with the plane on which said first spatial light modulator (2) is arranged, said first lens means (5) Fourier-transforming the input image displayed on said first spatial light modulator (2) and irradiated by said light source (3);
a second spatial light modulator (201) of light writing type arranged on the rear focal plane of said first lens means (5) on one side of which the image Fourier-transformed by said first lens means (5) is written;
a third spatial light modulator (6) including a memory (301) for displaying a product of information as a matched filter and phase information for coordinate transformation in an form of a computer generated hologram, thereby superposing the Fourier-transformed input image and one of said plurality of computer generated holograms on said second spatial modulator (201);
a second lens means (202) for projecting a condensed image of an image displayed on said third spatial light modulator (6) onto the other side of said second spatial light modulator (201);
a third lens means (8) arranged so as for its focal plane to coincide with the plane on which said second spatial modulator (201) is arranged for Fourier-transforming the image superposed on said second spatial modulator (201);
said light source (3) also coherently irradiating said third spatial modulator (6); and
a photoelectric transforming device (13) arranged on the rear focal plane of said third lens means (8).

10. The optical information processing apparatus as claimed in claim 9 wherein each of said first and third spatial light modulators is comprised of a liquid crystal display.

11. An optical recognition method for recognizing an object by pattern-matching an image of object with reference images,
said method comprising the steps of:
retrieving information f regarding an input image of object;
forming information F by optically Fourier-transforming said information f,
optically multiplying said information F with phase information A for performing a coordinate transformation which is displayed in a form of computer hologram to generate information F×A;
optically Fourier-transforming said information F×A to generate a first coordinate-transformed image;
optically Fourier-transforming said first coordinate-transformed image to generate first complex amplitude information;
Fourier-transforming a reference image h by a computer to generate information H;
multiplying said information H and said phase information A for performing a coordinate transformation by said computer to generate information H×A;
Fourier-transforming information H×A by said computer to generate a second coordinate-transformed image;
Fourier-transforming said second coordinate-transformed image by said computer to generated second complex amplitude information;
optically producing said first complex amplitude information with said second complex amplitude information display in a form of computer hologram to generate third complex amplitude information; and
optically Fourier-transforming said third complex amplitude information.

12. An optical recognition method for recognizing an object by pattern-matching an image of object with reference images,
said method comprising the steps of:
retrieving information f regarding an input image of object;
optically Fourier-transforming said information f to generate information F;
Fourier-transforming a reference image h by a computer to generate information H;
producing said information H with phase information A for performing a coordinate transformation by said computer to generated information H×A;
generating a coordinate-transformed image by Fourier-transforming said information H×A by the computer;
generating first complex amplitude information by Fourier-transforming said coordinate-transformed image by the computer;
multiplying said first complex amplitude information with said phase information A by the computer to generate second complex amplitude information;
generating third complex amplitude information by optically multiplying said information F with said second complex amplitude information displayed in a form of computer hologram; and
optically Fourier-transforming said third complex amplitude information.

## Patentansprüche

1. Gerät zur optischen Informationsverarbeitung, mit
- Mitteln (1) zur Eingabe eines Objektbildes,
- einem ersten Licht-Raum-Modulator (2) zur Darstellung des Eingabebildes;
- einer Lichtquelle (3) zur kohärenten Bestrahlung des ersten Licht-Raum-Modulators (2);
- einer ersten Linsenanordnung (5), die so angeordnet ist, daß ihre vordere Brennpunktebene mit der Ebene zusammenfällt, in welcher der erste Licht-Raum-Modulator (2) angeordnet ist;
- einem zweiten Licht-Raum-Modulator (6), mit Speichermitteln (7), der zur Darstellung eines koordinatentransformierenden, computergenerierten Hologramms in der hinteren Brennpunktebene der ersten Linsenanordnung (5) angeordnet ist, um eine Koordinatentransformation einer fouriertransformierten Abbildung des auf dem ersten Licht-Raum-Modulator (2) dargestellten Eingabebildes zu bewirken;
- einer zweiten Linsenanordnung (8), die so angeordnet ist, daß ihre vordere Brennpunktebene mit der hinteren Brennpunktebene der ersten Linsenanordnung (5) zusammenfällt;
- einer dritten Linsenanordnung (9), die so angeordnet ist, daß ihre vordere Brennpunktebene mit der hinteren Brennpunktebene der zweiten Linsenanordnung (8) zusammenfällt;
- einem dritten Licht-Raum-Modulator (10) in der hinteren Brennpunktebene der dritten Linsenanordnung (9), der ein computergeneriertes Hologramm eines Referenzmusters wiedergibt, welches mit dem Eingabemuster verglichen wird;
- einer vierten Linsenanordnung (12), die so angeordnet ist, daß ihre vordere Brennpunktebene mit der Ebene zusammenfällt, in welcher der dritte Licht-Raum-Modulator (10) angeordnet ist; und
- Mittel zur Photodetektion (13), die in der hinteren Brennpunktebene der vierten Linsenanordnung (12) angeordnet sind.

2. Gerät zur optischen Informationsverarbeitung nach Anspruch 1, **dadurch gekennzeichnet,** daßjeder der ersten bis dritten Licht-Raum-Modulatoren (2, 6, 10) von einer Flüssigkristallanzeige gebildet wird.

3. Gerät zur optischen Informationsverarbeitung, **gekennzeichnet durch:**
- Mittel (1) zur Eingabe eines Objektbildes;
- einen ersten Licht-Raum-Modulator (2) zur selektiven Darstellung des Eingabebildes und des Ausgangssignals eines Signalwandlers (103);
- eine Lichtquelle (3) zur kohärenten Bestrahlung des ersten Licht-Raum-Modulators (2);
- eine erste Linsenanordnung (5), die so angeordnet ist, daß ihre vordere Brennpunktebene mit der Ebene zusammenfällt, in welcher der erste Licht-Raum-Modulator (2) angeordnet ist;
- einen zweiten Licht-Raum-Modulator (6), der einen Speicher (101) enthält und der in der hinteren Brennpunktebene der ersten Linsenanordnung (5) angeordnet ist, zur selektiven Darstellung eines koordinatentransformierenden, computergenerierten Hologramms für die Koordinatentransformation einer fouriertransformierten Abbildung des Eingabebildes und eines computergenerierten Hologramms betreffend ein Referenzmuster, das mit dem Eingabebild verglichen werden soll;
- eine zweite Linsenanordnung (8), die so angeordnet ist, daß ihre vordere Brennpunktebene mit der hinteren Brennpunktebene der ersten Linsenanordnung (5) zusammenfällt;
- einen photoelektrischen Wandler (102), der in der hinteren Brennpunktebene der zweiten Linsenanordnung (8) angeordnet ist und in dem Mittel zur Signalwandlung (103) angeordnet sind, die eine Transformation der Ausgangssignale des photoelektrischen Wandlers (102) bewirken, um die transformierten Signale dem ersten Licht-Raum-Modulator (2) als Eingangssignale zuzuführen.

4. Gerät zur optischen Informationsverarbeitung nach Anspruch 3, bei dem jeder der ersten und zweiten Licht-Raum-Modulatoren (2, 6) von einer Flüssigkristallanzeige gebildet wird.

5. Gerät zur optischen Informationsverarbeitung, mit
- Mitteln (1) zur Eingabe eines Objektbildes;
- einem ersten Licht-Raum-Modulator (2) zur selektiven Darstellung des Eingabebildes und des Ausgangssignals eines Signalwandlers (103);
- einer ersten Linsenanordnung (5), die so angeordnet ist, daß ihre vordere Brennpunktebene mit der Ebene zusammenfällt, in welcher der erste Licht-Raum-Modulator (2) angeordnet ist;
- einem zweiten Licht-Raum-Modulator (201) in optisch ansteuerbarer Ausführung, der in der hinteren Brennpunktebene der ersten Linsenanordnung (5) auf der Seite angeordnet ist, auf die das fouriertransformierte Bild durch die erste Linsenanordnung (5) projiziert wird;
- einem dritten Licht-Raum-Modulator (6) mit einem Speicher (101) zur selektiven Darstellung eines koordinatentransformierenden, computergenerierten Hologramms und eines computergenerierten Hologramms betreffend ein Referenzmuster, das mit dem genannten eingegebenen Bild verglichen werden soll;
- einer zweiten Linsenanordnung (202) zur Projektion einer verkleinerten Abbildung eines auf dem dritten Licht-Raum-Modulator (6) dargestellten Bildes auf die andere Seite des zweiten Licht-Raum-Modulators (201), wodurch das auf dem ersten Licht-Raum-Modulator (2) dargestellte fouriertransformierte Bild und das auf dem dritten Licht-Raum-Modulator (6) dargestellte Bild überlagert werden;
- einer dritten Linsenanordnung (8), die so angeordnet ist, daß ihre vordere Brennpunktebene mit der Ebene zusammenfällt, in welcher der zweite Licht-Raum-Modulator (201) angeordnet ist;
- einer Lichtquelle (3) zur kohärenten Bestrahlung des ersten Licht-Raum-Modulators (2) und des dritten Licht-Raum-Modulators (6);
- einem photoelektrischen Wandler (102), der in der hinteren Brennpunktebene der zweiten Linsenanordnung (8) angeordnet ist und in welchem die Mittel zur Signalwandlung (103) angeordnet sind, die eine Transformation der Ausgangssignale des photoelektrischen Wandlers (102) bewirken, um die transformierten Signale dem ersten Licht-Raum-Modulator (2) als Bildsignale zuzuführen.

6. Gerät zur optischen Informationsverarbeitung nach Anspruch 5, in welchem jeder der ersten und dritten Licht-Raum-Modulatoren eine Flüssigkristallanzeige enthält.

7. Gerät zur optischen Informationsverarbeitung, **gekennzeichnet durch:**
- Mittel (1) zur Eingabe eines Objektbildes;
- einen ersten Licht-Raum-Modulator (2) zur Darstellung des Eingabebildes;
- eine Lichtquelle (3) zur kohärenten Bestrahlung des ersten Licht-Raum-Modulators (2);
- eine erste Linsenanordnung (5), die so angeordnet ist, daß ihre vordere Brennpunktebene mit der Ebene zusammenfällt, in welcher der erste Licht-Raum-Modulator (2) angeordnet ist;
- einen zweiten Licht-Raum-Modulator (6) mit Speichermitteln (301), der als angepaßtes Filter in der hinteren Brennpunktebene der ersten Linsenanordnung (5) so angeordnet ist, daß er zur Koordinatentransformation das Produkt einer Bildinformation und einer Phaseninformation in Form eines computergenerierten Hologramms darstellt;
- eine zweite Linsenanordnung (8), die so angeordnet ist, daß ihre Brennpunktebene mit der hinteren Brennpunktebene der ersten Linsenanordnung (5) zusammenfällt; und
- ein Gerät zur Photodetektion (13), das in der hinteren Brennpunktebene der zweiten Linsenanordnung angeordnet ist.

8. Gerät zur optischen Informationsverarbeitung nach Anspruch 7, in dem jeder der ersten und zweiten Licht-Raum-Modulatoren von einer Flüssigkristallanzeige gebildet wird.

9. Gerät zur optischen Informationsverarbeitung, **gekennzeichnet durch:**
- Mittel (1) zur Eingabe eines Objektbildes;
- einen ersten Licht-Raum-Modulator (2) zur Darstellung des Eingabebildes;
- eine Lichtquelle (3) zur kohärenten Bestrahlung des ersten Licht-Raum-Modulators (2);
- eine erste Linsenanordnung (5), die so angeordnet ist, daß ihre vordere Brennpunktebene mit der Ebene zusammenfällt, in welcher der erste Licht-Raum-Modulator (2) angeordnet ist, wobei die erste Linsenanordnung (5) eine Fouriertransformation des Eingabebildes bewirkt, das auf dem ersten Licht-Raum-Modulator (2) dargestellt und durch die Lichtquelle (3) bestrahlt wird;
- einen zweiten Licht-Raum-Modulator (201) in optisch ansteuerbarer Ausführung, der in der hinteren Brennpunktebene der ersten Linsenanordnung (5) auf der Seite angeordnet ist, auf die das fouriertransformierte Bild durch die erste Linsenanordnung (5) projiziert wird;
- einen dritten Licht-Raum-Modulator (6), der einen Speicher (301) enthält und der zur Koordinatentransformation als angepaßtes Filter das Produkt einer Bildinformation und einer Phaseninformation in Form eines computergenerierten Hologramms darstellt, wobei das fouriertransformierte Eingabebild und eines aus der Vielzahl der computergenerierten Hologramme auf dem zweiten Licht-Raum-Modulator (201) überlagert werden.
- eine zweite Linsenanordnung (202) zur Projektion einer verkleinerten Abbildung eines auf dem dritten Licht-Raum-Modulator (6) dargestellten Bildes auf die andere Seite des zweiten Licht-Raum-Modulators (201);
- eine dritte Linsenanordnung (8), die so angeordnet ist, daß ihre Brennpunktebene mit der Ebene zusammenfällt, in welcher der zweite Licht-Raum-Modulator (201) angeordnet ist, um eine Fouriertransformation des auf dem zweiten Licht-Raum-Modulator (201) überlagerten Bildes zu bewirken, wobei die Lichtquelle (3) auch den dritten Licht-Raum-Modulator (6) kohärent bestrahlt; und
- einen photoelektrischen Wandler (13), der in der hinteren Brennpunktebene der dritten Linsenanordnung (8) angeordnet ist.

10. Gerät zur optischen Informationsverarbeitung nach Anspruch 9, **dadurch gekennzeichnet,** daß jeder der ersten und dritten Licht-Raum-Modulatoren eine Flüssigkristallanzeige enthält.

11. Verfahren zur optischen Erkennung eines Objektes durch Mustervergleich eines Objektbildes mit Referenzbildern, das folgende Schritte umfaßt:
- Wiederauffinden der dem eingegebenen Objektbild zugeordneten Information f;
- Erzeugung der Information F durch optische Fouriertransformation der Information f;
- optische Multiplikation der Information F mit der Phaseninformation A, zur Erzeugung der Information F × A, um eine Koordinatentransformation durchzuführen, die in Form eines Computerhologramms dargestellt wird;
- optische Fouriertransformation der Information F × A zur Erzeugung eines ersten koordinatentransformierten Bildes;
- optische Fouriertransformation des ersten koordinatentransformierten Bildes zur Erzeugung einer ersten komplexen Amplitudeninformation;
- Fouriertransformation eines Referenzbildes h durch einen Computer zur Erzeugung der Information H;
- Multiplikation der Information H mit der Phaseninformation A zur Durchführung einer Koordinatentransformation durch den Computer, um die Information H × A zu erzeugen;
- Fouriertransformation der Information H × A durch den Computer zur Erzeugung eines zweiten koordinatentransformierten Bildes;
- Fouriertransformation des zweiten koordinatentransformierten Bildes durch den Computer zur Erzeugung einer zweiten komplexen Amplitudeninformation;
- optische Erzeugung der ersten komplexen Amplitudeninformation mit Darstellung der zweiten komplexen Amplitudeninformation in Form eines Computerhologramms zur Erzeugung einer dritten komplexen Amplitudeninformation; und
- optische Fouriertransformation der dritten komplexen Amplitudeninformation.

12. Verfahren zur optischen Erkennung eines Objektes durch Mustervergleich eines Objektbildes mit Referenzbildern, das folgende Schritte umfaßt:
- Wiederauffinden der dem eingegebenen Objektbild zugeordneten Information f;
- optische Fouriertransformation der Information f zur Erzeugung der Information F;
- Fouriertransformation eines Referenzbildes h durch einen Computer zur Erzeugung der Information H;
- Hinzufügen einer Phaseninformation A zur Information H zur Durchführung einer Koordinatentransformation durch den besagten Computer, um die Information H × A zu erzeugen;
- Erzeugen eines koordinatentransformierten Bildes durch Fouriertransformation der Information H × A durch den Computer;
- Erzeugen einer ersten komplexen Amplitudeninformation durch Fouriertransformation des koordinatentransformierten Bildes durch den Computer;
- Multiplikation der ersten komplexen Amplitudeninformation mit der Phasen information A durch den Computer zur Erzeugung einer zweiten komplexen Amplitudeninformation;
- Erzeugen einer dritten komplexen Amplitudeninformation durch optische Multiplikation der Information F mit der zweiten komplexen Amplitudeninformation, die in Form eines Computerhologramms dargestellt wird; und
- optische Fouriertransformation der dritten komplexen Amplitudeninformation.

## Revendications

1. Dispositif de traitement optique d'informations comprenant un moyen d'application en entrée (1) destiné à appliquer en entrée une image d'un objet,
un premier modulateur spatial de lumière (2) destiné à afficher ladite image en entrée,
une source de lumière (3) destinée à illuminer de façon cohérente ledit premier modulateur de lumière (2),
un premier moyen de lentille (5) agencé de façon que son plan focal antérieur coïncide avec le plan sur lequel ledit premier modulateur spatial de lumière (2) est agencé,
un second modulateur spatial de lumière (6) comprenant un moyen de mémoire (7) et agencé sur le plan focal postérieur de ladite première lentille (5) afin d'afficher un hologramme généré par ordinateur de transformation en coordonnées destiné à une transformation en coordonnées d'une image en transformée de Fourier de ladite image en entrée affichée sur ledit premier modulateur spatial de lumière (2),
un second moyen de lentille (8) agencé de façon que son plan focal antérieur coïncide avec le plan focal postérieur dudit premier moyen de lentille (5),
un troisième moyen de lentille (9) agencé de façon que son plan focal antérieur coïncide avec le plan focal postérieur dudit second moyen de lentille (8),
un troisième modulateur spatial de lumière (10) agencé sur le plan focal postérieur dudit troisième moyen de lentille (9) afin d'afficher un hologramme généré par ordinateur concernant un motif de référence devant être comparé à ladite image en entrée,
un quatrième moyen de lentille (12) agencé de façon que son plan focal antérieur coïncide avec le plan sur lequel ledit troisième modulateur spatial de lumière (10) est agencé, et
un moyen de photodétection (13) agencé sur le plan focal postérieur dudit quatrième moyen de lentille (12).

2. Dispositif de traitement optique d'informations selon la revendication 1, dans lequel chacun desdits premier à troisième modulateurs spatiaux de lumière (2, 6, 10) est composé d'un dispositif d'affichage à cristaux liquides.

3. Dispositif de traitement optique d'informations comprenant :
un moyen d'application en entrée (1) destiné à appliquer une image d'un objet,
un premier modulateur spatial de lumière (2) destiné à afficher sélectivement ladite image en entrée et le signal de sortie provenant d'un moyen de transformation de signal (103),
une source de lumière (3) destinée à illuminer de façon cohérente ledit premier modulateur de lumière (2),
un premier moyen de lentille (5) agencé de façon que son plan focal antérieur coïncide avec le plan sur lequel ledit premier modulateur spatial de lumière (2) est agencé,
un second modulateur spatial de lumière (6) comprenant une mémoire (101) et agencé sur le plan focal postérieur dudit premier moyen de lentille (5) afin d'afficher un hologramme généré par ordinateur de transformation de coordonnées destiné à transformer en coordonnées une image en transformée de Fourier de ladite image en entrée et un hologramme généré par ordinateur concernant un motif de référence devant être comparé à ladite image en entrée, sélectivement,
un second moyen de lentille (8) agencé de façon que son plan focal antérieur coïncide avec le plan focal postérieur dudit premier moyen de lentille (5),
un dispositif de transformation photoélectrique (102) agencé sur le plan focal postérieur dudit second moyen de lentille (8), et
dans lequel le moyen de transformation de signal (103) est agencé pour transformer les signaux de sortie dudit dispositif de transformation photoélectrique (102) afin d'appliquer en entrée les signaux transformés en tant que signaux d'entrée vers ledit premier modulateur spatial de lumière (2).

4. Dispositif de traitement optique d'informations selon la revendication 3, dans lequel chacun desdits premier et second modulateurs spatiaux de lumière (2, 6) est constitué d'un dispositif d'affichage à cristaux liquides.

5. Dispositif de traitement optique d'informations comprenant :
un moyen d'application en entrée (1) destiné à appliquer en entrée une image d'un objet,
un premier modulateur spatial de lumière (2) destiné à afficher sélectivement ladite image en entrée et le signal de sortie provenant d'un moyen de transformation de signal (103),
un premier moyen de lentille (5) agencé de façon que son plan focal antérieur coïncide avec le plan sur lequel ledit premier modulateur spatial de lumière (2) est agencé,
un second modulateur spatial de lumière (201) du type à écriture lumineuse, agencé sur le plan focal postérieur dudit premier moyen de lentille (5) sur une première face duquel l'image soumise à une transformation de Fourier par ladite première lentille (5) est écrite,
un troisième modulateur spatial de lumière (6) comprenant une mémoire (101) destiné à afficher sélectivement un hologramme généré par ordinateur de transformation en coordonnées et un hologramme généré par ordinateur se rapportant à un motif de référence devant être comparé à ladite image en entrée,
un second moyen de lentille (202) destiné à projeter une image condensée d'une image affichée sur ledit second modulateur spatial de lumière (6) jusque sur l'autre face dudit second modulateur spatial de lumière (201), en superposant ainsi l'image en transformée de Fourier affichée sur ledit premier modulateur spatial de lumière (2) et l'image affichée sur ledit second modulateur spatial de lumière (6),
un troisième moyen de lentille (8) agencé de façon que son plan focal antérieur coïncide avec le plan sur lequel ledit second modulateur spatial de lumière (201) est agencé,
une source de lumière (3) destinée à illuminer de façon cohérente ledit premier modulateur de lumière (2) et ledit second modulateur de lumière (6),
un dispositif de transformation photoélectrique (102) agencé sur le plan focal postérieur dudit troisième moyen de lentille (8), et
dans lequel le moyen de transformation de signal (103) est agencé pour transformer les signaux de sortie dudit dispositif de transformation photoélectrique (102) afin d'appliquer en entrée des signaux transformés en tant que signaux d'affichage audit premier modulateur spatial de lumière (2).

6. Dispositif de traitement optique d'informations selon la revendication 5, dans lequel chacun desdits premier et troisième modulateurs spatiaux de lumière est constitué d'un dispositif d'affichage à cristaux liquides.

7. Dispositif de traitement optique d'informations comprenant :
un moyen d'application en entrée (1) destiné à appliquer en entrée une image d'un objet,
un premier modulateur spatial de lumière (2) destiné à afficher ladite image en entrée,
une source de lumière (3) destinée à illuminer de façon cohérente ledit premier modulateur de lumière (2),
un premier moyen de lentille (5) agencé de façon que son plan focal antérieur coïncide avec le plan sur lequel ledit premier modulateur spatial de lumière (2) est agencé,
un second modulateur spatial de lumière (6) comprenant une mémoire (301) et agencé sur le plan focal postérieur de ladite première lentille (5) afin d'afficher un produit d'informations sous forme d'un filtre adapté et d'informations de phase destinées à une transformation en coordonnées sous la forme d'un hologramme généré par ordinateur,
un second moyen de lentille (8) agencé de façon que son plan focal coïncide avec le plan focal postérieur dudit premier moyen de lentille (5), et
un dispositif de photodétection (13) agencé sur le plan focal postérieur dudit second moyen de lentille.

8. Dispositif de traitement optique d'informations selon la revendication 7, dans lequel chacun desdits premier et second modulateurs spatiaux de lumière est constitué d'un dispositif d'affichage à cristaux liquides.

9. Dispositif de traitement optique d'informations comprenant :
un moyen d'application en entrée (1) destiné à appliquer en entrée une image d'un objet,
un premier modulateur spatial de lumière (2) destiné à afficher ladite image en entrée,
une source de lumière (3) destinée à illuminer d'un rayonnement cohérent ledit premier modulateur de lumière (2),
un premier moyen de lentille (5) agencé de façon que son plan focal antérieur coïncide avec le plan sur lequel ledit premier modulateur spatial de lumière (2) est agencé, ledit premier moyen de lentille (5) appliquant une transformation de Fourier à l'image en entrée affichée sur ledit premier modulateur spatial de lumière (2) et illuminée par ladite source de lumière (3),
un second modulateur spatial de lumière (201) du type à écriture lumineuse, agencé sur le plan focal postérieur dudit premier moyen de lentille (5) sur une première face duquel l'image soumise à une transformation de Fourier par ledit premier moyen de lentille (5) est écrite,
un troisième modulateur spatial de lumière (6) comprenant une mémoire (301) destiné à afficher un produit d'informations sous forme d'un filtre adapté et d'informations de phase destinées à une transformation de coordonnées sous la forme d'un hologramme généré par ordinateur, en superposant ainsi l'image en entrée en transformée de Fourier et l'un des hologrammes de ladite pluralité d'hologrammes générés par ordinateur sur ledit second modulateur spatial (201),
un second moyen de lentille (202) destiné à projeter une image condensée d'une image affichée sur ledit troisième modulateur spatial de lumière (6) jusque sur l'autre face dudit second modulateur spatial de lumière (201) ,
un troisième moyen de lentille (8) agencé de façon que son plan focal coïncide avec le plan sur lequel ledit second modulateur spatial (201) est agencé afin d'appliquer une transformation de Fourier sur ledit second modulateur spatial (201),
ladite source de lumière (3) illuminant également de façon cohérente ledit troisième modulateur spatial (6), et
un dispositif de transformation photoélectrique (13) agencé sur le plan focal postérieur dudit troisième moyen de lentille (8).

10. Dispositif de traitement optique d'informations selon la revendication 9, dans lequel chacun desdits premier et troisième modulateurs spatiaux de lumière est constitué d'un dispositif d'affichage à cristaux liquides.

11. Procédé de reconnaissance optique destiné à reconnaître un objet par mise en correspondance de motifs d'une image d'un objet avec des images de référence,
ledit procédé comprenant les étapes consistant à :
récupérer des informations f se rapportant à l'image en entrée d'un objet,
élaborer des informations F en appliquant optiquement une transformation de Fourier auxdites informations f,
multiplier optiquement lesdites informations F par des informations de phase A afin d'effectuer une transformation de coordonnées qui est affichée sous la forme d'un hologramme généré par ordinateur afin de générer des informations F x A,
appliquer optiquement une transformation de Fourier auxdites informations F x A afin de générer une première image transformée en coordonnées,
appliquer optiquement une transformation de Fourier à ladite première image transformée en coordonnées afin de générer des premières informations d'amplitude complexe,
appliquer une transformation de Fourier à une image de référence h à l'aide d'un ordinateur afin de générer des informations H,
multiplier lesdites informations H et lesdites informations de phase A afin de réaliser une transformation de coordonnées à l'aide dudit ordinateur afin de générer des informations H x A,
appliquer une transformation de Fourier aux informations H x A à l'aide dudit ordinateur afin de générer une seconde image transformée en coordonnées,
appliquer une transformation de Fourier à ladite seconde image transformée en coordonnées à l'aide dudit ordinateur afin de générer des secondes informations d'amplitude complexe,
faire le produit, de façon optique, desdites premières informations d'amplitude complexe et desdites secondes informations d'amplitude complexe affichées sous la forme d'un hologramme d'ordinateur afin de générer des troisièmes informations d'amplitude complexe, et
appliquer de façon optique une transformation de Fourier auxdites troisièmes informations d'amplitude complexe.

12. Procédé de reconnaissance optique destiné à reconnaître un objet par une mise en correspondance de motifs d'une image d'un objet avec des images de référence,
ledit procédé comprenant les étapes consistant à :
récupérer des informations f se rapportant à l'image en entrée d'un objet,
appliquer optiquement une transformation de Fourier auxdites informations f afin de générer des informations F,
appliquer une transformation de Fourier à une image de référence h à l'aide d'un ordinateur afin de générer des informations H,
faire le produit desdites informations H et d'informations de phase A destinées à exécuter une transformation de coordonnées à l'aide dudit ordinateur afin de générer des informations H x A,
générer une image transformée en coordonnées en appliquant une transformation de Fourier auxdites informations H x A à l'aide de l'ordinateur,
générer des premières informations d'amplitude complexe en appliquant une transformation de Fourier à ladite image transformée en coordonnées à l'aide de l'ordinateur,
multiplier lesdites premières informations d'amplitude complexe par lesdites informations de phase A à l'aide de l'ordinateur afin de générer des secondes informations d'amplitude complexe,
générer des troisièmes informations d'amplitude complexe en multipliant optiquement lesdites informations F par lesdites secondes informations d'amplitude complexes affichées sous la forme d'un hologramme généré par ordinateur, et
appliquer optiquement une transformation de Fourier auxdites troisièmes informations d'amplitude complexe.
